# EUROPÄISCHE PATENTSCHRIFT

(11) **EP 3 415 052 B1**
(45) Veröffentlichungstag und Bekanntmachung des Hinweises auf die Patenterteilung: **29.07.2020**
(21) Anmeldenummer: 18176898.7
(22) Anmeldetag: 11.06.2018
(51) Int. Cl.: A47J 31/20

(54) **TEESIEBEINSATZ MIT DICHTUNGSELEMENT UND SYSTEM MIT EINEM SOLCHEN TEESIEBEINSATZ**
TEA STRAINER INSERT WITH SEALING ELEMENT AND A SYSTEM COMPRISING SUCH A TEA STRAINER INSERT
TISSU POUR FILTRE À THÉ À ÉLÉMENT D'ÉTANCHÉITÉ ET SYSTÈME DOTÉ D'UN TEL TISSU POUR FILTRE À THÉ

(30) Priorität: 12.06.2017 DE 102017112903
(43) Veröffentlichungstag der Anmeldung: 19.12.2018
(73) Patentinhaber: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Sascha, 48607 Ochtrup (DE); ZILS, Jürgen, 51399 Burscheid (DE)
(74) Vertreter: Cohausz & Florack

(56) Entgegenhaltungen:
- WO-A1-2016/096955
- US-A- 3 927 608

## Beschreibung

Die Erfindung betrifft einen Teesiebeinsatz zum Einsetzen in eine Brühkammer eines Teeautomaten, mit einem Trägerelement für ein Sieb und mit einem an dem Trägerelement angeordneten Dichtungselement, das den Teesiebeinsatz zumindest abschnittsweise randseitig nach außen begrenzt. Weiterhin betrifft die Erfindung ein System mit einem Teeautomaten und einem solchen Teesiebeinsatz. Zudem betrifft die Erfindung ein Dichtungselement für einen solchen Teesiebeinsatz.

Während Kaffeeautomaten zum automatischen Zubereiten von Kaffeegetränken seit langem bekannt sind, sind erst in jüngerer Zeit Teeautomaten entwickelt worden, die speziell für die automatische Zubereitung von Teegetränken vorgesehen sind.

Ein solcher speziell für die Zubereitung von Teegetränken vorgesehene Teeautomat ist beispielweise aus der WO 2016/096955 A1 bekannt. Der Teeautomat ist zur Zubereitung eines Teegetränks in einer Brühkammer eingerichtet, wobei in die Brühkammer ein Teesiebeinsatz eingesetzt wird, der mit einer außerhalb der Brühkammer angeordneten und magnetisch mit dem Teesiebeinsatz gekoppelten Verfahreinrichtung in der Brühkammer herauf und herab gefahren werden kann. Zur Zubereitung eines Teegetränks werden Teeblätter auf den Teesiebeinsatz gegeben und mit diesem zu Beginn eines Brühvorgangs in der Brühkammer herabgefahren, so dass die Teeblätter mit dem in die Brühkammer gefüllten heißen Wasser in Kontakt kommen. Am Ende des Brühvorgangs wird der Teesiebeinsatz wieder aus der Brühkammer herausgefahren, wobei die Teeblätter abgeseiht werden. Um zu vermeiden, dass Teeblätter auf die Unterseite des Siebes gelangen können, weist der Teesiebeinsatz eine randseitige Dichtung oder Reinigungslippe auf.

Es hat sich herausgestellt, dass die randseitige Dichtung bzw. Reinigungslippe in der Praxis zu Problemen führen kann. So wurde unter anderem festgestellt, dass der von der Dichtung auf die Wandung der Brühkammer ausgeübte Druck sehr ungleichmäßig ist, wodurch es beim Verfahren des Siebes zu einer Ruckelbewegung kommen kann, die das Verfahren des Teesiebeinsatzes stört. Unter Umständen kann es sogar zu einem Verkanten des Teesiebeinsatzes in der Brühkammer kommen.

Vor diesem Hintergrund liegt der vorliegenden Erfindung die Aufgabe zugrunde, einen verbesserten Teesiebeinsatz zu Verfügung zu stellen, sowie ein System mit einem Teeautomaten und einem zugehörigen Teesiebeinsatz, mit denen die zuvor genannten Probleme vermieden werden.

Diese Aufgabe wird bei einem Teesiebeinsatz zum Einsetzen in eine Brühkammer eines Teeautomaten mit einem Trägerelement für ein Sieb und mit einem an dem Trägerelement angeordneten Dichtungselement, das den Teesiebeinsatz zumindest abschnittsweise randseitig nach außen begrenzt, erfindungsgemäß dadurch gelöst, dass das Dichtungselement eine Mehrzahl von in Umfangsrichtung des Dichtungselements voneinander beabstandeten, randseitig nach außen weisenden Dichtungssegmenten aufweist.

Weiterhin wird die oben genannte Aufgabe erfindungsgemäß gelöst durch ein Dichtungselement für einen solchen Teesiebeinsatz, das eine Mehrzahl von in Umfangsrichtung des Dichtungselements voneinander beabstandete, randseitig nach außen weisenden Dichtungssegmente aufweist.

Es wurde erkannt, dass durch das Vorsehen mehrerer in Umfangsrichtung voneinander beabstandeter Dichtungssegmente der Andruck des Dichtungselements an die Wandung der Brühkammer vergleichmäßigt und ein Ruckeln bei der Bewegung des Siebes unterbunden werden kann. Weiterhin haben die Dichtungssegmente den Vorteil, dass sie etwaige an der Wandung haftende Teeblätter von dieser abstreifen und vorzugsweise auf den Teesiebeinsatz führen.

Der Teesiebeinsatz ist zum Einsetzen in eine Brühkammer eines Teeautomaten vorgesehen. Vorzugsweise ist der Teesiebeinsatz zum Einsetzen in eine zylindrische Brühkammer vorgesehen. Entsprechend weist der Teesiebeinsatz vorzugsweise eine im Wesentlichen kreisförmige Geometrie auf.

Der Teesiebeinsatz weißt ein Trägerelement für ein Sieb auf. Das Trägerelement kann beispielsweise in Form eines Trägerrings ausgebildet sein, an dem ein Siebelement befestigt werden kann. Vorzugsweise ist das Sieb bereits mit dem Teesiebeinsatz verbunden, so dass der Teesiebeinsatz insbesondere auch das Sieb umfassen kann. Insbesondere können das Trägerelement und das Sieb einteilig ausgebildet sein.

Der Teesiebeinsatz weist ein an dem Trägerelement angeordnetes Dichtungselement auf. Vorzugsweise sind das Dichtungselement und das Trägerelement lösbar miteinander verbunden, so dass sich das Dichtungselement auswechseln lässt. Das Dichtungselement begrenzt den Teesiebeinsatz zumindest abschnittsweise randseitig nach außen. Das Dichtungselement ist demnach so angeordnet, dass es, wenn der Teesiebeinsatz in eine Brühkammer eingesetzt ist, an der Brühkammerwandung angeordnet ist, insbesondere an dieser anliegt. Das Dichtungselement kann in Form eines in Umfangrichtung ggf. aufgetrennten Rings ausgebildet sein und den Teesiebeinsatz vollständig umgeben. Alternativ kann das Dichtungselement den Teesiebeinsatz abschnittsweise umgeben bzw. nach außen begrenzen, vorzugsweise über mindestens 50%, insbesondere über mindestens 60% des Umfangs des Teesiebeinsatzes. Das Dichtungselement kann beispielsweise C-förmig ausgebildet sein.

Das Dichtungselement besteht vorzugweise aus einem elastischen Material, insbesondere Gummi oder elastomerem Kunststoff.

Das Dichtungselement weist eine Mehrzahl von in Umfangsrichtung des Dichtungselements voneinander beabstandeten, randseitig nach außen weisenden Dichtungssegmenten auf. Beispielsweise kann das Dichtungselement über seinen Umfang verteilt mehrfach in radialer Richtung eingekerbt sein bzw. in Umfangsrichtung mehrere Ausnehmungen aufweisen, so dass sich die mehreren nach außen weisenden Dichtungssegmente ergeben. Die Dichtungssegmente sind zwar in Umfangsrichtung voneinander beabstandet, in radialer Richtung sind sie jedoch vorzugsweise über einen weiter innen liegenden Teil des Dichtungselements miteinander verbunden.

Es wurde erkannt, dass durch eine Mehrzahl von in Umfangsrichtung beabstandeten, randseitig nach außen weisenden Dichtungssegmenten eine gleichmäßige Bewegung des Teesiebeinsatzes in der Brühkammer ermöglicht wird. Eine gleichmäßige Bewegung kann insbesondere dadurch erreicht werden, dass das Dichtungselement bevorzugt mindestens zehn, weiter bevorzugt mindestens zwanzig in Umfangsrichtung voneinander beabstandeter Dichtungssegmente aufweist.

Weiterhin wird die oben genannte Aufgabe gelöst durch ein System, umfassend eine nach oben geöffnete Brühkammer und den zuvor beschriebenen, in die Brühkammer des Teeautomaten einsetzbaren Teesiebeinsatz, wobei das Dichtungselement des Teesiebeinsatzes an die Brühkammerwandung angepasst ist. Insbesondere sind die Außengeometrie des Dichtungselements und die Innengeometrie der Brühkammerwandung aneinander angepasst, so dass der Teesiebeinsatz zumindest abschnittsweise mit dem Dichtungselement zur Wandung der Brühkammer hin abdichtet, wenn der Teesiebeinsatz in der Brühkammer eingesetzt ist.

Vorzugsweise umfasst das System weiterhin einen Teeautomaten, der zur Zubereitung eines Teegetränks eingerichtet ist und die nach oben geöffnete Brühkammer umfasst. Neben der Brühkammer weist der Teeautomat weitere Komponenten auf, die für die automatische Zubereitung von Teegetränken erforderlich sind. Insbesondere kann der Teeautomat eine oder mehrere der folgenden Komponenten aufweisen: eine Heißwasserversorgung, eine Einfüllöffnung für lose Teeblätter, einen Siebeinsatz, eine Verfahreinrichtung zum Bewegen des Siebeinsatzes in der Brühkammer und eine Ausgabeeinrichtung zur Ausgabe des fertigen Teegetränks aus der Brühkammer.

Der Teeautomat ist vorzugsweise zur automatischen Zubereitung von Teegetränken in einer Brühkammer eingerichtet. Zu diesem Zweck weist der Teeautomat insbesondere eine Steuereinrichtung auf, die die automatische Zubereitung eines Teegetränks in der Brühkammer steuert.

Im Folgenden werden verschiedene Ausführungsformen des Teesiebeinsatzes, des Dichtungselements und des Systems beschrieben, wobei die einzelnen Ausführungsformen jeweils unabhängig voneinander für den Teesiebeinsatz, für das Dichtungselement und für das System gelten und zudem untereinander kombiniert werden können.

Bei einer ersten Ausführungsform weist das Dichtungselement einen in Umfangsrichtung durchgehenden Innenkörper auf, von dem aus die Dichtungssegmente radial nach außen abstehen. Durch den Innenkörper werden die Dichtungsegmente in der gewünschten Position gehalten. Weiterhin kann das Dichtungselement auf diese Weise aus einem Stück gefertigt werden, beispielsweise indem in einen ring- oder C-förmigen Körper randseitig umlaufende Ausnehmungen oder radiale Kerben eingebracht werden, so dass ein radial innen verlaufender Innenkörper mit radial nach außen abstehenden Dichtungssegmenten entsteht. Radial nach außen bedeutet, dass die Dichtungssegmente in radialer Richtung des Dichtungselements, d.h. ausgehend vom (fiktiven) Mittelpunkt des Dichtungselements bzw. vom Mittelpunkt des Trägerelements nach außen, angeordnet sind. Die radial nach außen abstehenden Dichtungssegmente sind demnach weiter außen angeordnet als der Innenkörper des Dichtungselements.

Bei einer weiteren Ausführungsform sind die randseitig nach außen weisenden Dichtungssegmente schräg nach oben zur Oberseite des Teesiebeinsatzes gerichtet. Bei einer entsprechenden Ausführungsform des Systems sind die Dichtungssegmente derart dimensioniert, dass sie, wenn der Teesiebeinsatz in die Brühkammer eingesetzt ist, zur Oberseite der Brühkammer vorstehen. Auf diese Weise kommen die Dichtungssegmente beim Herauffahren des Teesiebeinsatzes in einer Brühkammer zuerst mit an der Wandung der Brühkammer befindlichen Teeblättern in Kontakt und streifen diese ab.

Bei einer weiteren Ausführungsform sind der Innenkörper und die Dichtungssegmente einstückig gebildet, insbesondere aus einem Stück Gummi oder einem Stück elastomerem Kunststoff. Auf diese Weise kann das Dichtungselement einfach hergestellt werden, indem aus einem Stück Gummi oder Elastomer, insbesondere einem Gummi- oder Elastomerring oder -ringsegment in Umfangsrichtung beabstandete Stücke entfernt werden oder über den Umfang verteilt Kerben in radialer Richtung eingebracht werden.

Bei einer weiteren Ausführungsform weisen die Dichtungssegmente ausgehend vom Innenkörper nach außen eine sich reduzierende Dicke auf. Vorzugsweise weisen die Dichtungssegmente an ihrem radial äußeren Ende einen keilartigen Bereich auf, der, wenn der Teesiebeinsatz in einer Brühkammer eingesetzt ist, an der Wandung der Brühkammer zur Anlage kommt. Auf diese Weise lassen sich durch die Dichtungssegmente Teeblätter besser von der Wandung einer Brühkammer abstreifen.

Bei einer weiteren Ausführungsform ist radial innenseitig des Dichtungselements ein Federelement angeordnet, das das Dichtungselement radial nach außen vorspannt. Auf diese Weise kann ein gleichmäßiger Anpressdruck des Dichtungselements an die Innenwandung einer Brühkammer bewirkt werden, wenn der Teesiebeinsatz in die Brühkammer eingesetzt ist

Bei einer weiteren Ausführungsform weist der Teesiebeinsatz auf der Oberseite eine Aufnahme für eine Zutatenportion, insbesondere für eine Portion Teeblätter, auf mit einer Aufnahmegrundfläche, und die Dichtungssegmente ragen auf der Oberseite über die Aufnahmegrundfläche hinaus. Auf diese Weise wird erreicht, dass von den Dichtungssegmenten an einer Wandung einer Brühkammer abgestreifte Teeblätter an den Dichtungssegmenten hinab in die Aufnahme für die Zutatenportion zur unterhalb der Dichtungssegmente angeordneten Aufnahmegrundfläche gelangen. Dadurch wird vermieden, dass sich die Teeblätter im Bereich der Dichtungssegmente sammeln, wodurch die Funktion der Dichtungssegmente behindert würde.

Bei einer weiteren Ausführungsform weist das Dichtungselement in Umfangsrichtung zwei entgegengesetzte Enden auf. Beispielsweise kann das Dichtungselement C-förmig sein, wobei die zwei entgegengesetzten Enden des Dichtungselements voneinander beabstandet sind. Alternativ kann das Dichtungselement auch die Form eines in Umfangsrichtung getrennten Rings aufweisen, so dass die zwei entgegengesetzten Enden des Dichtungselements benachbart angeordnet sind oder sogar aneinander anliegen.

Bei einer weiteren Ausführungsform weist das Trägerelement eine randseitige Nut auf, in die das Dichtungselement einsetzbar ist. Auf diese Weise kann das Dichtungselement an der gewünschten Position sicher am Trägerelement angeordnet werden. Das Dichtungselement weist vorzugsweise eine stärkere Krümmung auf als die Nut, so dass das Dichtungselement mit einer leichten Vorspannung in der Nut sitzt und dadurch dort besser gehalten wird.

Bei einer weiteren Ausführungsform weisen das Dichtungselement und das Trägerelement komplementäre Befestigungsmittel auf, um das Dichtungselement in der Nut des Trägerelements zu fixieren. Auf diese Weise kann das Dichtungselement während der Bewegung des Trägerelements in der Brühkammer nicht abfallen. Beispielsweise kann das Dichtungselement einen Haken vorgesehen sein und die Nut des Trägerelements kann eine dazu korrespondierende Kontur, beispielsweise eine Hinterschneidung aufweisen. Handelt es sich um ein Dichtungselement mit zwei entgegengesetzten Enden in Umfangsrichtung des Dichtungselements, so können beispielsweise an einem oder an beiden Enden des Dichtungselements Befestigungselemente wie zum Beispiel Haken und die Nut des Trägerelements dazu korrespondierende Befestigungselemente wie Hinterschneidungen aufweisen.

Bei einer weiteren Ausführungsform ist das Dichtungselement in der Nut zwischen einer ersten und einer zweiten Position in der Nut des Trägerelements verschiebbar und das Dichtungselement und das Trägerelement weisen ein Paar komplementärer Befestigungsmittel auf, beispielsweise einen Haken und eine Nut, die in Eingriff sind, wenn sich das Dichtungselement in der ersten Position befindet, und die außer Eingriff sind, wenn sich das Dichtungselement in der zweiten Position befindet. Auf diese Weise wird das Anbringen bzw. Auswechseln des Dichtungselements vereinfacht.

Bei einer weiteren Ausführungsform weisen das Dichtungselement und das Trägerelement eine Mehrzahl von Paaren, vorzugsweise lediglich zwei Paare, komplementärer Befestigungsmittel auf, wobei unabhängig von der Position des Dichtungselements in der Nut jeweils mindestens ein Paar der Mehrzahl von Paaren und gemäß einer Ausführungsform lediglich ein Paar komplementärer Befestigungsmittel in Eingriff sind. Auf diese Weise ist auch beim Verschieben des Dichtungselements in der Nut mindestens ein Paar komplementärer Befestigungsmittel in Eingriff, so dass das Dichtungselement nicht versehentlich aus der Nut herausfallen kann. Beispielsweise kann das Dichtungselement zwei gegenüberliegende Enden aufweisen, an denen jeweils ein Haken vorgesehen ist, der in eine jeweilige Hinterschneidung in der Nut eingehakt werden kann. Vorzugsweise sind die Haken und Hinterschneidungen so dimensioniert, dass unabhängig von der Position des Dichtungselements an mindestens einem der Enden des Dichtungselements der Haken mit der korrespondierenden Hinterschneidung in Eingriff ist.

Bei einer Ausführungsform des Systems weist der Teeautomat eine Verfahreinrichtung auf, die dazu eingerichtet ist, den Teesiebeinsatz in der Brühkammer zu verfahren. Die Verfahreinrichtung kann beispielweise dazu eingerichtet sein, mit dem Teesiebeinsatz magnetisch gekoppelt zu werden. Zu diesem Zweck kann der Teesiebeinsatz insbesondere magnetische Elemente aufweisen, die mit außerhalb der Brühkammer angeordneten und verfahrbaren magnetischen Elementen der Verfahreinrichtung gekoppelt werden können.

Durch die Verwendung des zuvor beschriebenen Teesiebeinsatzes für einen Teeautomaten mit einer solchen Verfahreinrichtung kann ein Ruckeln des Teesiebeinsatzes während des Verfahrens vermieden und damit ein gleichmäßiger Verfahrvorgang erreicht werden. Hierdurch können Teeblätter mit dem Teesiebeinsatz am Ende eines Brühvorgangs gleichmäßig und zuverlässig aus dem Wasser in der Brühkammer herausgefahren werden, so dass die Brühzeit nicht unerwünscht verlängert wird.

Bei einer magnetischen Kopplung des Teesiebeinsatzes mit der Verfahreinrichtung hat die vorliegend beschriebene Ausgestaltung des Teesiebeinsatzes den besonderen Vorteil, dass eine Entkopplung des Teesiebeinsatzes von der Verfahreinrichtung aufgrund eines Verkantens des Teesiebeinsatzes in der Brühkammer vermieden werden kann.

Bei einer weiteren Ausführungsform des Systems liegen die Dichtungssegmente des Teesiebeinsatzes an der Wandung der Brühkammer an, wenn der Teesiebeinsatz in der Brühkammer angeordnet ist. Auf diese Weise wird eine zuverlässige Abdichtung erreicht, so dass keine Teeblätter auf die Unterseite des Teesiebeinsatzes gelangen können

Bei einer weiteren Ausführungsform des Systems sind die Dichtungssegmente derart dimensioniert, dass sie, wenn der Teesiebeinsatz in die Brühkammer eingesetzt ist, in Umfangsrichtung aneinander anliegen. Zu diesem Zweck ist der Durchmesser des Teesiebeinsatzes mit dem Dichtungselement außerhalb der Brühkammer vorzugsweise etwas größer als der Durchmesser der Brühkammer. Beim Einsetzen des Teesiebeinsatzes in die Brühkammer, werden die Dichtungssegmente dann verbogen oder komprimiert, so dass sie in Umfangsrichtung zur Anlage aneinander kommen. Auf diese Weise wird erreicht, dass selbst kleinere Teeblattfragmente nicht am Dichtungselement vorbei auf die Unterseite des Teesiebeinsatzes gelangen können.

Im Folgenden werden weitere Ausführungsformen 1 bis 7 des Teesiebeinsatzes, Ausführungsformen 8 bis 13 des Systems sowie Ausführungsform 14 des Dichtungselementes beschrieben. Diese können untereinander und mit den zuvor beschriebenen Ausführungsformen kombiniert werden:
1. Teesiebeinsatz zum Einsetzen in eine Brühkammer eines Teeautomaten, mit einem Trägerelement für ein Sieb und mit einem an dem Trägerelement angeordneten Dichtungselement, das den Teesiebeinsatz zumindest abschnittsweise randseitig nach außen begrenzt, dadurch gekennzeichnet, dass das Dichtungselement eine Mehrzahl von in Umfangsrichtung des Dichtungselements voneinander beabstandeten, randseitig nach außen weisenden Dichtungssegmenten aufweist.
2. Teesiebeinsatz nach Ausführungsform 1, dadurch gekennzeichnet, dass das Dichtungselement einen in Umfangsrichtung durchgehenden Innenkörper aufweist, von dem aus die Dichtungssegmente radial nach außen abstehen.
3. Teesiebeinsatz nach Ausführungsform 1 oder 2, dadurch gekennzeichnet, dass die randseitig nach außen weisenden Dichtungssegmente schräg nach oben zur Oberseite des Teesiebeinsatzes gerichtet sind.
4. Teesiebeinsatz nach Ausführungsform 2 oder 3, dadurch gekennzeichnet, dass der Innenkörper und die Dichtungssegmente einstückig gebildet sind, insbesondere aus einem Stück Gummi oder einem Stück elastomerem Kunststoff.
5. Teesiebeinsatz nach einer der Ausführungsformen 1 bis 4, dadurch gekennzeichnet, dass das Trägerelement eine randseitige Nut aufweist, in die das Dichtungselement einsetzbar ist, und dass das Dichtungselement und das Trägerelement komplementäre Befestigungsmittel aufweisen, um das Dichtungselement in der Nut des Trägerelements zu fixieren.
6. Teesiebeinsatz nach Ausführungsform 5, dadurch gekennzeichnet, dass das Dichtungselement in der Nut des Trägerelements zwischen einer ersten und einer zweiten Position verschiebbar ist und dass das Dichtungselement und das Trägerelement ein Paar komplementärer Befestigungsmittel aufweisen, die in Eingriff sind, wenn sich das Dichtungselement in der ersten Position befindet, und die außer Eingriff sind, wenn sich das Dichtungselement in der zweiten Position befindet.
7. Teesiebeinsatz nach Ausführungsform 6, dadurch gekennzeichnet, dass das Dichtungselement und das Trägerelement eine Mehrzahl von Paaren komplementärer Befestigungsmittel aufweisen und dass unabhängig von der Position des Dichtungselements in der Nut jeweils mindestens ein Paar der Mehrzahl von Paaren komplementärer Befestigungsmittel in Eingriff sind.
8. System, umfassend eine nach oben geöffnete Brühkammer und einen in die Brühkammer des Teeautomaten einsetzbaren Teesiebeinsatz nach einer der Ausführungsformen 1 bis 7, wobei das Dichtungselement des Teesiebeinsatzes an die Brühkammerwandung angepasst ist.
9. System nach Ausführungsform 8, weiter umfassend einen Teeautomaten, eingerichtet zur Zubereitung eines Teegetränks, der die nach oben geöffneten Brühkammer umfasst.
10. System nach Ausführungsform 9, dadurch gekennzeichnet, dass der Teeautomat eine Verfahreinrichtung aufweist, die dazu eingerichtet ist, den Teesiebeinsatz in der Brühkammer zu verfahren.
11. System nach einer der Ausführungsformen 8 bis 10, dadurch gekennzeichnet, dass die Dichtungssegmente, wenn der Teesiebeinsatz in der Brühkammer angeordnet ist, an der Wandung der Brühkammer anliegen.
12. System nach einer der Ausführungsformen 8 bis 11, dadurch gekennzeichnet, dass die Dichtungssegmente derart dimensioniert sind, dass sie, wenn der Teesiebeinsatz in die Brühkammer eingesetzt ist, zur Oberseite der Brühkammer vorstehen.
13. System nach einer der Ausführungsformen 8 bis 12, dadurch gekennzeichnet, dass die Dichtungssegmente derart dimensioniert sind, dass sie, wenn der Teesiebeinsatz in die Brühkammer eingesetzt ist, in Umfangsrichtung aneinander anliegen.
14. Dichtungselement für einen Teesiebeinsatz nach einer der Ausführungsformen 1 bis 7, umfassend eine Mehrzahl von in Umfangsrichtung des Dichtungselements voneinander beabstandeten, randseitig nach außen weisenden Dichtungssegmenten.

Weitere Merkmale und Vorteile des Teesiebeinsatzes und des Systems ergeben sich aus der nachfolgenden Beschreibung von Ausführungsbeispielen, wobei auf die beigefügte Zeichnung Bezug genommen wird.

In der Zeichnung zeigen
- Fig. 1a - c: ein Ausführungsbeispiel des Systems mit einem Teeautomaten und einem Teesiebeinsatz gemäß einem Ausführungsbeispiel des Teesiebeinsatzes,
- Fig. 2a - b: den Teesiebeinsatz aus Fig. 1a im Querschnitt und in Aufsicht,
- Fig. 3: das Dichtungselement des Teesiebeinsatzes aus Fig. 2a in Ansicht von unten,
- Fig. 4a - c: das in das Trägerelement eingesetzte Dichtungselement des Teesiebeinsatzes aus Fig. 2a in der ersten und zweiten Position,
- Fig. 5: den in die Brühkammer des Teeautomaten aus Fig. 1a eingesetzten Teesiebeinsatz im Querschnitt und
- Fig. 6: den Teesiebeinsatz vor dem Einsetzen in die Brühkammer.

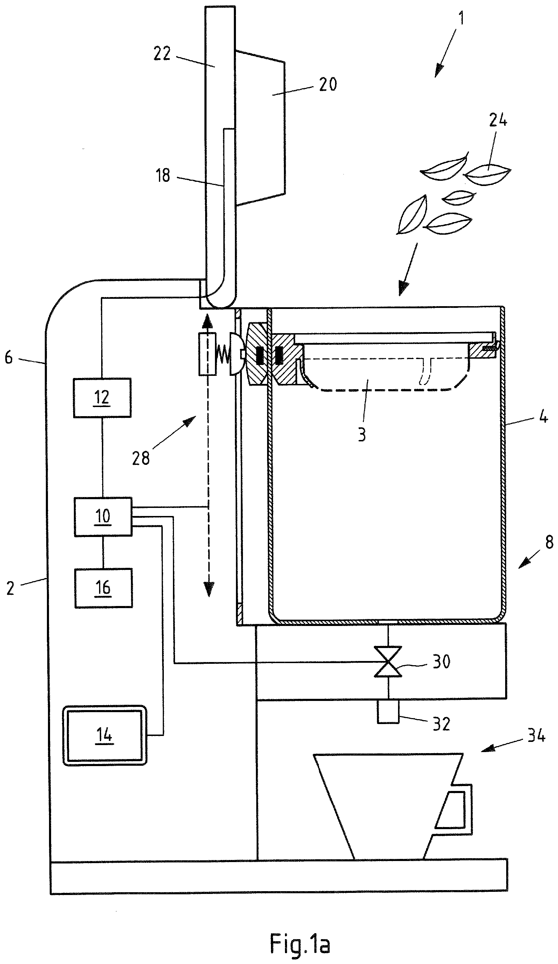

Die Figuren 1a-c zeigen ein Ausführungsbeispiel des Systems 1 mit einem Teeautomaten 2 und einem Teesiebeinsatz 3 entsprechend einem Ausführungsbeispiel des Teesiebeinsatzes.

Der Teeautomat 2 ist zur automatischen Zubereitung von Teegetränken in einer Brühkammer 4 eingerichtet. Für die Brühkammer 4 ist am Gehäuse 6 des Teeautomaten 2 eine Brühkammeraufnahme 8 vorgesehen, in die die Brühkammer wie in Fig. 1a gezeigt einsetzbar ist. Die Brühkammer 4 ist also als entnehmbare Brühkammer ausgestaltet. Stattdessen könnte die Brühkammer auch integral mit dem Gehäuse 6 ausgebildet sein.

In dem Gehäuse 6 sind weitere Komponenten angeordnet, die für die automatische Zubereitung von Teegetränken erforderlich sind. So weist der Teeautomat 2 eine Steuereinrichtung 10, eine Heißwasserversorgung 12 und eine Nutzerschnittstelle 16 in Form eines Touchscreens auf.

Auf einem mit der Steuereinrichtung 10 verbundenen Speicher 16 ist ein Programm mit Befehlen gespeichert, deren Ausführung auf einem Mikroprozessor der Steuereinrichtung 10 eine Steuerung der einzelnen Komponenten des Teeautomaten 2 bewirkt. Beispielsweise kann die Steuereinrichtung 10 zur automatischen Zubereitung eines Teegetränks die Heißwasserversorgung 12 ansteuern, so dass diese zur Durchführung eines Brühvorgangs über eine entsprechende Zuleitung 18 heißes Wasser durch einen Verteilerkopf 20 in die Brühkammer 4 leitet.

Weiterhin kann die Steuereinrichtung 10 über die Nutzerschnittstelle 14 die Ausgabe von Nutzerinformationen bewirken, beispielsweise dass ein Brühvorgang abgeschlossen ist, oder Nutzereingaben empfangen, beispielsweise einen Nutzerbefehl zur Durchführung eines Brühvorgangs.

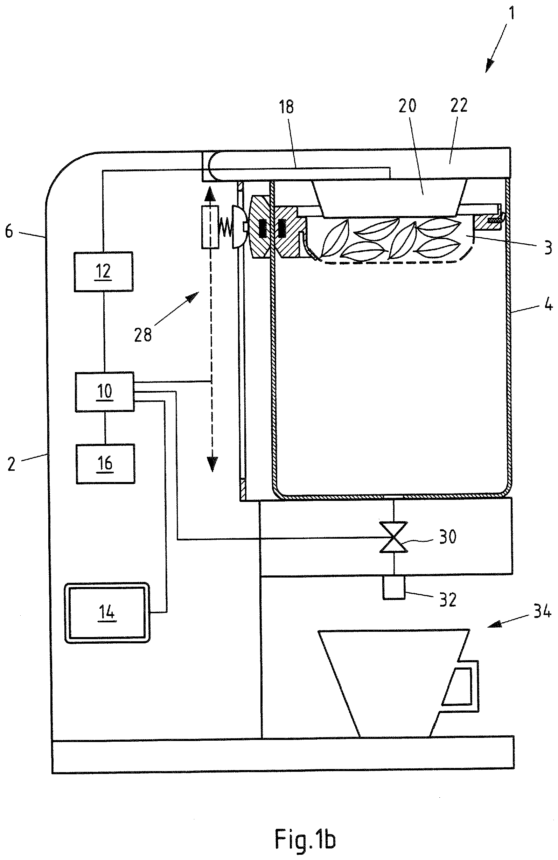

Um mit dem Teeautomaten 2 ein Teegetränk zuzubereiten, kann ein Nutzer den als schwenkbaren Deckel 22 ausgebildeten oberen Teil des Gehäuses 6 wie in Figur 1a gezeigt nach oben klappen, so dass die Brühkammer 4 von oben zugänglich ist. Der Nutzer kann dann eine Zutatenportion, insbesondere eine Portion loser Teeblätter 24, in den Teesiebeinsatz 3 geben, der in die Brühkammer 4 eingesetzt wird. Anschließend wird der Deckel 22 wieder geschlossen und der Nutzer kann durch eine entsprechende Eingabe über die Nutzerschnittstelle 14 einen Brühvorgang starten (vgl. Fig. 1b).

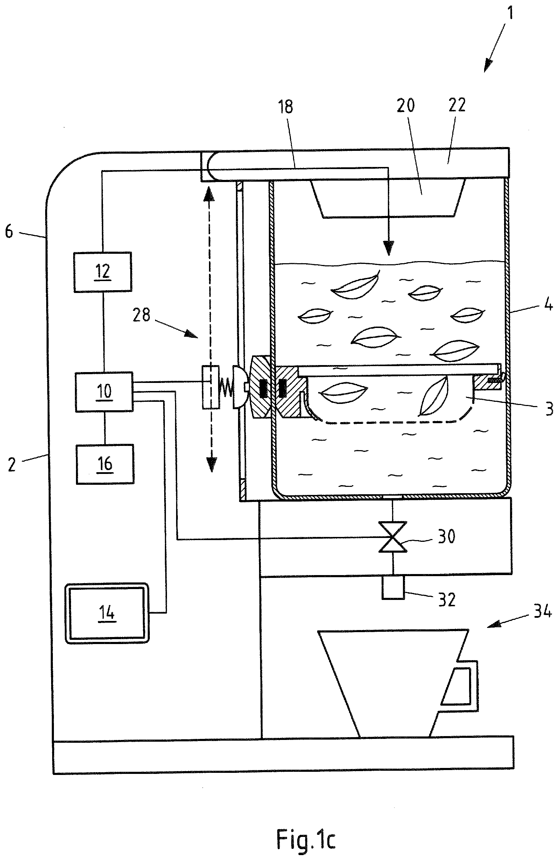

Auf den Befehl des Nutzers steuert die Steuereinrichtung 10 dann die Heißwasserversorgung 12 an, so dass eine vorgegebene Menge Wasser mit einer vorgegebenen Temperatur in die Brühkammer 4 eingeleitet wird. Weiterhin wird der Teesiebeinsatz 3 durch eine von der Steuereinrichtung 10 angesteuerte, beispielsweise magnetisch mit dem Teesiebeinsatz 3 gekoppelte Verfahreinrichtung 28 in die Brühkammer hinabgefahren, so dass die Teeblätter 24 dort mit dem eingeleiteten heißen Wasser in Kontakt kommen (vgl. Fig. 1c).

Nach Ablauf einer vorgegebenen Brühdauer steuert die Steuereinrichtung 10 die Verfahreinrichtung 28 an, so dass diese den Teesiebeinsatz 3 und damit die Teeblätter 24 wieder aus dem Wasser in der Brühkammer 4 heraushebt. Das fertige Teegetränk kann dann auf eine Nutzeranforderung, beispielsweise über die Nutzerschnittstelle 14, oder automatisch mittels eines steuerbaren Ventils 30 durch einen Auslass 32 in eine unterhalb der Brühkammer 4 angeordnete Aufnahme 34 für das fertige Teegetränk, beispielsweise eine Tasse oder eine Kanne, abgefüllt werden.

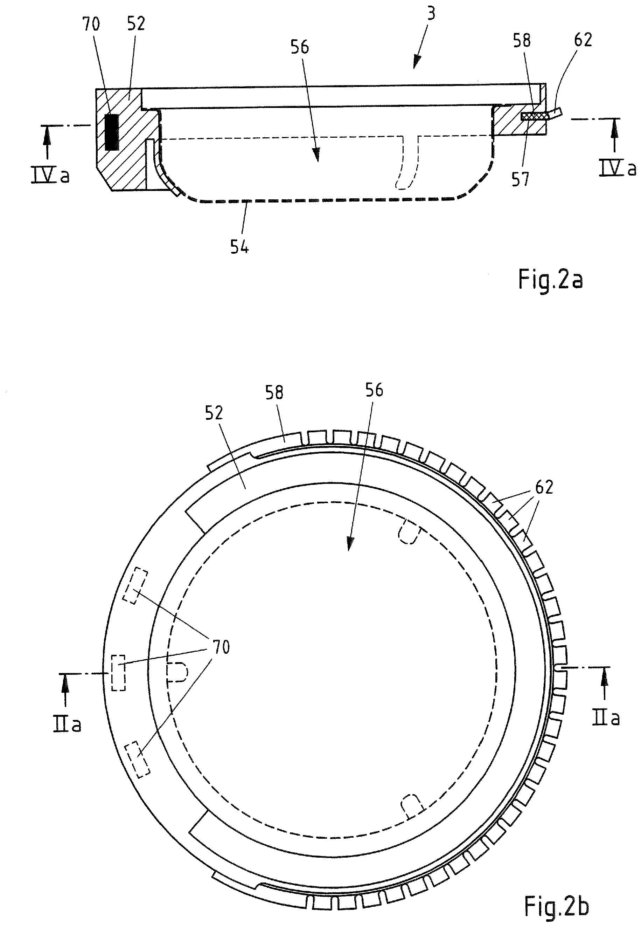

Der Aufbau des Teesiebeinsatzes 3 wird nun anhand der Figuren 2a bis 4b erläutert.

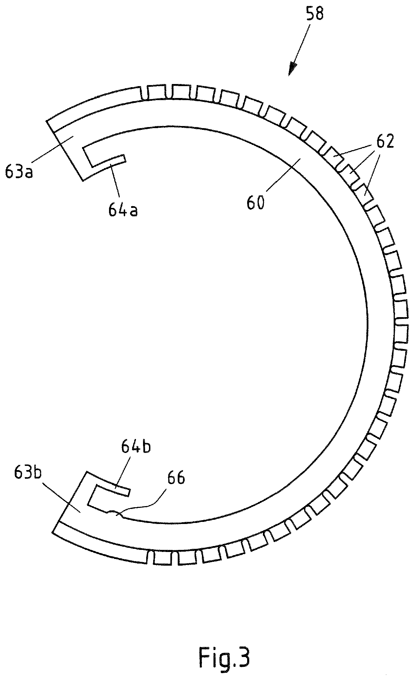

Figur 2a zeigt den Teesiebeinsatz 3 aus Fig. 1a im Querschnitt und Figur 2b den Teesiebeinsatz 3 in Ansicht von oben. Der Teesiebeinsatz 3 weist ein ringförmiges Trägerelement 52 für ein Sieb 54 auf, das zusammen mit dem Trägerelement 52 eine Aufnahme 56 für eine Zutatenportion, insbesondere eine Portion Teeblätter 24 definiert. Das Trägerelement 52 weist randseitig eine Nut 57 auf, in der ein C-förmiges Dichtungselement 58 angeordnet ist, das den Teesiebeinsatz 3 abschnittsweise randseitig nach außen begrenzt. Figur 3 zeigt das Dichtungselement 58 in Ansicht von unten.

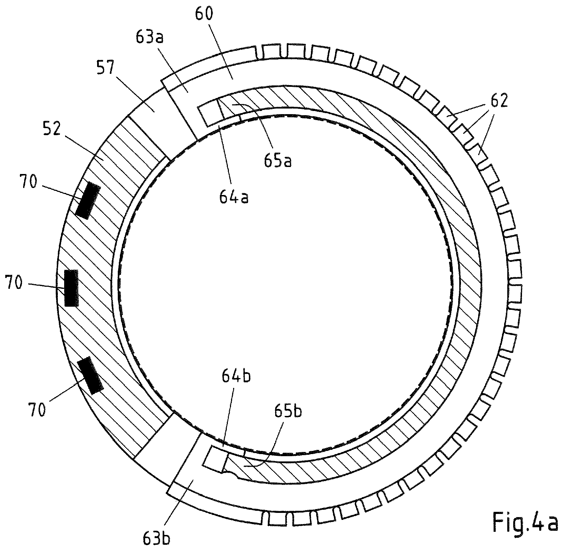

Das Dichtungselement 58 weist einen Innenkörper 60 auf sowie eine Mehrzahl von in Umfangsrichtung des Dichtungselements 58 voneinander beabstandeten Dichtungssegmenten 62, die randseitig nach außen weisen. Die Dichtungssegmente 62 und der Innenkörper 60 sind einstückig und aus Gummi gebildet. An den beiden gegenüberliegenden Enden 63a-b des Dichtungselements 58 sind jeweils Haken 64a-b vorgesehen, die zu entsprechenden Konturen 65a-b (vgl. Fig. 4a) in der Nut 57 korrespondieren, die von den Haken 64a-b hintergriffen werden, wenn das Dichtungselement 58 in der Nut 57 angeordnet ist. Der Haken 64a und die Kontur 65a sowie der Haken 64b und die Kontur 65b bilden dadurch jeweils ein Paar komplementärer Befestigungsmittel, um das Dichtungselement 58 in der Nut 57 zu fixieren.

Zur zusätzlichen Fixierung des Dichtungselements 58 in der Nut 57 ist die Krümmung des Dichtungselements 58 etwas größer als die Krümmung der Nut 57, so dass das Dichtungselement 58 mit einer leichten Vorspannung nach Innen in der Nut 57 angeordnet ist. Weiterhin ist an einem Ende 63b des Dichtungselements 58 eine dem Haken 64b gegenüber liegende Auswölbung 66 angeordnet, um das Dichtungselement 58 in der Nut 57 zu fixieren.

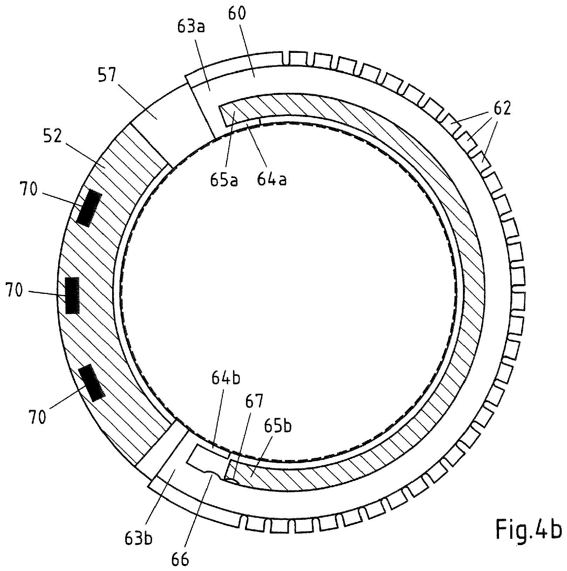

Die Nut 57 ist etwas länger ausgebildet als das Dichtungselement 58, so dass das Dichtungselement 58 in der Nut beweglich ist. Fig. 4b zeigt das in die Nut 57 des Trägerelements 52 eingesetzte Dichtungselement 58 in einer ersten Position und Fig. 4b zeigt das Dichtungselement 58 in einer zweiten Position. Bei den Figuren 4a und 4b handelt es sich um Schnittansichten von unten entsprechend der in der in Fig. 2a mit "IVa" bezeichneten Schnittebene.

In der ersten Position in Fig. 4a sind die Haken 64a-b und die korrespondierenden Konturen 65a-b jeweils in Eingriff, so dass das Dichtungselement 58 in der Nut 57 fixiert ist. Zur sicheren Fixierung ist zudem die Ausbuchtung 66 in eine korrespondierende Vertiefung 67 in der Nut 57 eingerastet (vgl. Fig. 4b).

In der zweiten Position in Fig. 4b sind der Haken 64a und die korrespondierende Kontur 65a und ebenso die Ausbuchtung 66 und die Vertiefung 67 außer Eingriff, so dass sich das Dichtungselement 58 zum Beispiel zu Reinigungszwecken oder zum Austausch einfach aus der Nut 57 entnehmen lässt. In der zweiten Position verbleiben der Haken 64b und die Kontur 65b jedoch zunächst im Eingriff, damit das Dichtungselement 58 nicht versehentlich aus der Nut herausfallen kann.

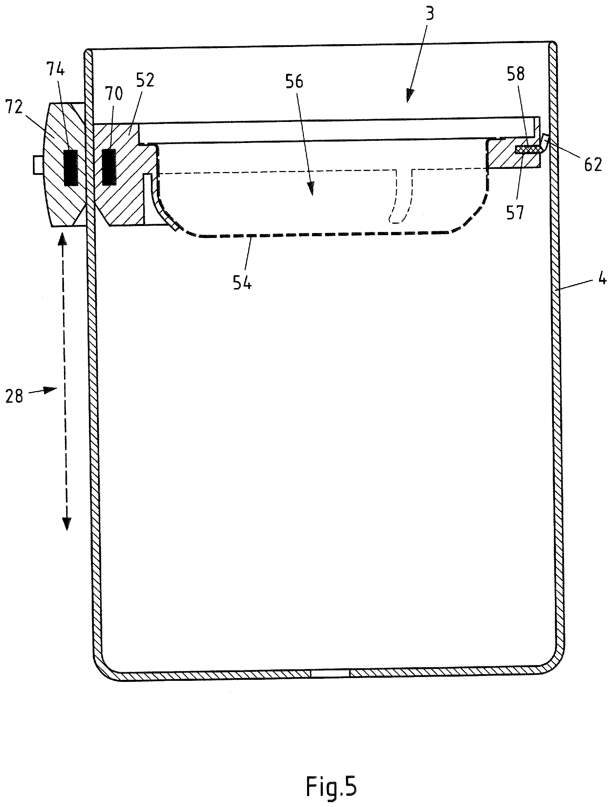

Fig. 5 zeigt einen Querschnitt des in die Brühkammer 4 des Teeautomaten 2 eingesetzten Teesiebeinsatzes 3. Der Teesiebeinsatz 3 ist an die Innengeometrie der Brühkammer 4 angepasst, so dass das Dichtungselement 58 in Umfangsrichtung zur Wand der Brühkammer 4 abdichtet. Zwischen dem Trägerelement 52 und dem Dichtungselement 58 kann optional ein Federelement (nicht dargestellt) angeordnet sein, das das Dichtungselement 58 radial nach außen drückt, so dass ein gleichmäßiger Anpressdruck an die Wandung der Brühkammer 4 erreicht wird. Beispielsweise kann das Federelement in der Nut 57 angeordnet sein.

Der Teesiebeinsatz 3 ist in der Brühkammer 4 mittels der Verfahreinrichtung 28 verfahrbar, wobei die Verfahreinrichtung 28 und der Teesiebeinsatz 3 zu diesem Zweck magnetisch gekoppelt sind. Insbesondere sind bei dem Teesiebeinsatz 3 drei magnetische Elemente in Form von Magneten 70 in das Trägerelement 52 integriert, die zu in einem verfahrbaren Element 72 der Verfahreinrichtung 28 integrierten magnetischen Elementen in Form von Magneten 74 korrespondieren. Durch Verfahren des verfahrbaren Elements 72 mit den magnetischen Elementen 74 kann dadurch der Siebeinsatz 3 innerhalb der Brühkammer 4 verfahren werden.

Wenn am Ende eines Brühvorgangs der Teesiebeinsatz 3 mit der Verfahreinrichtung 28 nach oben gefahren wird, streifen die Dichtungssegmente 62 an der Wandung der Brühkammer 4 anhaftende Teeblätter ab, so dass diese in der Brühkammer 4 nicht in den Bereich unterhalb des Teesiebeinsatzes 3 gelangen können. Das Abstreifen von Teeblättern von der Brühkammerwandung wird insbesondere dadurch begünstigt, dass die Dichtungssegmente 62 wie in Fig. 5 ersichtlich schräg nach oben zur Oberseite des Teesiebeinsatzes 3 gerichtet sind und insbesondere zur Oberseite der Brühkammer 4 vorstehen.

Durch die Ausgestaltung des Dichtungselements 58 mit mehreren in Umfangsrichtung beabstandeten Dichtungssegmenten 62 wird ein Ruckeln während der Bewegung des Siebeinsatzes 3 und insbesondere ein Verkanten des Dichtungselements 58 in der Brühkammer 4 verhindert. Dies führt einerseits zu einer gleichmäßigeren Bewegung des Teesiebeinsatzes 3 in der Brühkammer und verhindert anderseits, dass der Teesiebeinsatz 3 und die Verfahreinrichtung 28 durch Verkanten des Teesiebeinsatzes 3 in der Brühkammer 4 voneinander entkoppeln.

Auf diese Weise wird die Betriebszuverlässigkeit des Teeautomaten 2 des Systems 1 verbessert.

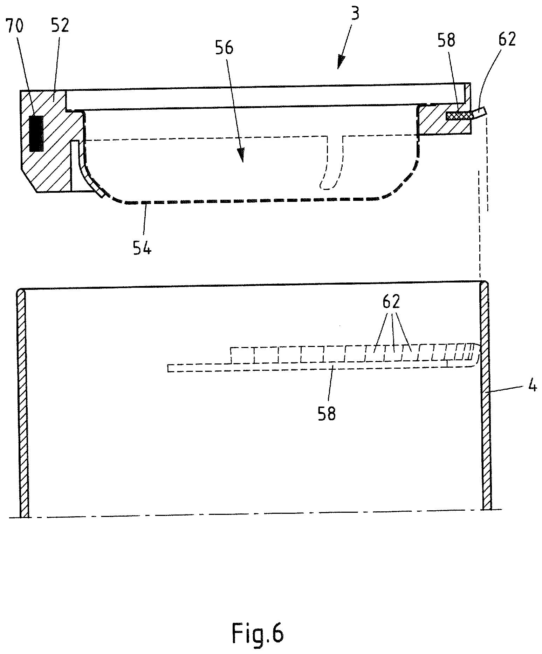

Fig. 6 zeigt als weiteres Ausführungsbeispiel eine Schnittansicht des Siebeinsatzes 3 kurz vor dem Einsetzen in die Brühkammer 4. Die Dichtungssegmente 62 des Dichtungselements 58 sind derart dimensioniert, dass sie nach dem Einsetzen des Teesiebeinsatzes 3 in die Brühkammer 4 in Umfangsrichtung aneinander anliegen. Zu diesem Zweck ist der Durchmesser des Teesiebeinsatzes 3 mit dem Dichtungselement 58 außerhalb der Brühkammer 4 etwas größer als der Innendurchmesser der Brühkammer 4 (wie in Fig. 6 dargestellt ist). Die Dichtungssegmente 62 werden dann beim Einsetzen des Teesiebeinsatzes 3 in die Brühkammer 4 derart verbogen und komprimiert, dass sie aneinander anliegen, wie die gestrichelte Darstellung des in der Brühkammer 4 angeordneten Dichtungssegments zeigt.

Dadurch können auch kleine Teeblattfragmente daran gehindert werden, am Dichtungselement 58 vorbei auf die Unterseite des Teesiebeinsatzes 3 zu gelangen.

## Patentansprüche

1. Teesiebeinsatz (3) zum Einsetzen in eine Brühkammer (4) eines Teeautomaten (2),
- mit einem Trägerelement (52) für ein Sieb (54) und
- mit einem an dem Trägerelement (52) angeordneten Dichtungselement (58), das den Teesiebeinsatz (3) zumindest abschnittsweise randseitig nach außen begrenzt,
**dadurch gekennzeichnet,**
- **dass** das Dichtungselement (58) eine Mehrzahl von in Umfangsrichtung des Dichtungselements (58) voneinander beabstandeten, randseitig nach außen weisenden Dichtungssegmenten (62) aufweist und
- **dass** das Trägerelement (52) eine randseitige Nut (57) aufweist, in die das Dichtungselement (58) einsetzbar ist, und dass das Dichtungselement (58) und das Trägerelement (52) komplementäre Befestigungsmittel (64a-b, 65a-b) aufweisen, um das Dichtungselement (58) in der Nut (57) des Trägerelements (52) zu fixieren, wobei das Dichtungselement (58) einen Haken und die Nut (57) des Trägerelements (52) eine dazu korrespondierende Kontur als komplementäre Befestigungsmittel (64a-b, 65a-b) aufweisen.

2. Teesiebeinsatz nach Anspruch 1,
**dadurch gekennzeichnet, dass** das Dichtungselement (58) einen in Umfangsrichtung durchgehenden Innenkörper (60) aufweist, von dem aus die Dichtungssegmente (62) radial nach außen abstehen.

3. Teesiebeinsatz nach Anspruch 1 oder 2,
**dadurch gekennzeichnet, dass** die randseitig nach außen weisenden Dichtungssegmente (62) schräg nach oben zur Oberseite des Teesiebeinsatzes (3) gerichtet sind.

4. Teesiebeinsatz nach Anspruch 2 oder 3,
**dadurch gekennzeichnet, dass** der Innenkörper (60) und die Dichtungssegmente (62) einstückig gebildet sind, insbesondere aus einem Stück Gummi oder einem Stück elastomerem Kunststoff.

5. Teesiebeinsatz nach einem der Ansprüche 1 bis 4,
**dadurch gekennzeichnet, dass** das Dichtungselement (58) in der Nut (57) des Trägerelements (52) zwischen einer ersten und einer zweiten Position verschiebbar ist und dass das Dichtungselement (58) und das Trägerelement (52) ein Paar komplementärer Befestigungsmittel (64a, 65a; 64b, 65b) aufweisen, die in Eingriff sind, wenn sich das Dichtungselement (58) in der ersten Position befindet, und die außer Eingriff sind, wenn sich das Dichtungselement (58) in der zweiten Position befindet.

6. Teesiebeinsatz nach Anspruch 5,
**dadurch gekennzeichnet, dass** das Dichtungselement (58) und das Trägerelement (52) eine Mehrzahl von Paaren komplementärer Befestigungsmittel (64a, 65a; 64b, 65b) aufweisen und dass unabhängig von der Position des Dichtungselements (58) in der Nut (57) jeweils mindestens ein Paar der Mehrzahl von Paaren komplementärer Befestigungsmittel (64a, 65a; 64b, 65b) in Eingriff sind.

7. System (1), umfassend
- eine nach oben geöffnete Brühkammer (4) und
- einen in die Brühkammer (4) des Teeautomaten (2) einsetzbaren Teesiebeinsatz (3) nach einem der Ansprüche 1 bis 6,
- wobei das Dichtungselement (58) des Teesiebeinsatzes (3) an die Brühkammerwandung angepasst ist.

8. System nach Anspruch 7, weiter umfassend
- einen Teeautomaten (2), eingerichtet zur Zubereitung eines Teegetränks, der die nach oben geöffneten Brühkammer (4) umfasst.

9. System nach Anspruch 8,
**dadurch gekennzeichnet, dass** der Teeautomat (2) eine Verfahreinrichtung (28) aufweist, die dazu eingerichtet ist, den Teesiebeinsatz (3) in der Brühkammer (4) zu verfahren.

10. System nach einem der Ansprüche 7 bis 9,
**dadurch gekennzeichnet, dass** die Dichtungssegmente (62), wenn der Teesiebeinsatz (3) in der Brühkammer (4) angeordnet ist, an der Wandung der Brühkammer (4) anliegen.

11. System nach einem der Ansprüche 7 bis 10,
**dadurch gekennzeichnet, dass** die Dichtungssegmente derart dimensioniert sind, dass sie, wenn der Teesiebeinsatz in die Brühkammer eingesetzt ist, zur Oberseite der Brühkammer vorstehen.

12. System nach einem der Ansprüche 7 bis 11,
**dadurch gekennzeichnet, dass** die Dichtungssegmente derart dimensioniert sind, dass sie, wenn der Teesiebeinsatz in die Brühkammer eingesetzt ist, in Umfangsrichtung aneinander anliegen.

13. Verwendung eines Dichtungselements (58) für einen Teesiebeinsatz (3) nach einem der Ansprüche 1 bis 6, wobei das Dichtungselement (58) eine Mehrzahl von in Umfangsrichtung des Dichtungselements (58) voneinander beabstandeten, randseitig nach außen weisenden Dichtungssegmenten (62) umfasst.

## Claims

1. Tea strainer insert (3) for insertion into a brewing chamber (4) of an automatic tea maker (2),
- with a support element (52) for a strainer (54) and
- with a sealing element (58) arranged on the support element (52), which limits the tea strainer insert (3) at least in sections towards the outside edge,
**characterised in that**
- the sealing element (58) has a plurality of sealing segments (62) spaced apart from one another in the circumferential direction of the sealing element (58) and pointing outwardly at the edge, and
- that the support element (52) has an edge-side groove (57) into which the sealing element (58) can be inserted, and that the sealing element (58) and the support element (52) have complementary fastening means (64a-b, 65a-b) in order to fix the sealing element (58) in the groove (57) of the support element (52), wherein the sealing element (58) has a hook and the groove (57) of the support element (52) has a contour corresponding thereto as complementary fastening means (64a -b, 65a-b).

2. Tea strainer insert according to claim 1,
**characterised in that** the sealing element (58) has a continuous inner body (60) in the circumferential direction, from which the sealing segments (62) protrude radially outwards.

3. Tea strainer insert according to claim 1 or 2,
**characterised in that** the sealing segments (62) pointing outwardly at the edge are directed slanting upwards towards the upper side of the tea strainer insert (3).

4. Tea strainer insert according to claim 2 or 3,
**characterised in that** the inner body (60) and the sealing segments (62) are formed in one piece, in particular from a piece of rubber or a piece of elastomeric plastic.

5. Tea strainer insert according to any one of claims 1 to 4,
**characterised in that** the sealing element (58) in the groove (57) of the support element (52) is displaceable between a first and a second position, and that the sealing element (58) and the support element (52) have a pair of complementary fastening means (64a, 65a; 64b, 65b) that are engaged when the sealing element (58) is in the first position and are disengaged when the sealing element (58) is in the second position.

6. Tea strainer insert according to claim 5,
**characterised in that** the sealing element (58) and the support element (52) have a plurality of pairs of complementary fastening means (64a, 65a; 64b, 65b), and that irrespective of the position of the sealing element (58) in the groove (57), in each case at least one pair of the plurality of pairs of complementary fastening means (64a, 65a; 64b, 65b) are engaged.

7. System (1) comprising
- a brewing chamber (4) opened towards the top and
- a tea strainer insert (3) according to any one of claims 1 to 6 that can be inserted into the brewing chamber (4) of the automatic tea maker (2),
- wherein the sealing element (58) of the tea strainer insert (3) is adapted to the brewing chamber wall.

8. System according to claim 7, further comprising
- an automatic tea maker (2) arranged to prepare a tea beverage, the automatic tea maker comprising the brewing chamber (4) opened towards the top.

9. System according to claim 8,
**characterised in that** the tea machine (2) has a moving device (28) which is configured to move the tea strainer insert (3) within the brewing chamber (4).

10. System according to any one of claims 7 to 9,
**characterised in that** the sealing segments (62) abut the wall of the brewing chamber (4) when the tea strainer insert (3) is arranged in the brewing chamber (4).

11. System according to any one of claims 7 to 10,
**characterised in that** the sealing segments are dimensioned such that they protrude to the upper side of the brewing chamber when the tea strainer insert is inserted into the brewing chamber.

12. System according to any one of claims 7 to 11,
**characterised in that** the sealing segments are dimensioned such that they abut one another in the circumferential direction when the tea strainer insert is inserted into the brewing chamber.

13. Use of a sealing element (58) for a tea strainer insert (3) according to any one of claims 1 to 6, wherein the sealing element (58) comprises a plurality of sealing segments (62) which are spaced apart from one another in the circumferential direction of the sealing element (58) and point outwardly at the edge.

## Revendications

1. Élément filtrant pour thé (3) destiné à être introduit dans une chambre d'infusion (4) d'un automate à thé (2),
- avec un élément porteur (52) pour un filtre (54) et
- avec un élément d'étanchéité (58) agencé sur l'élément porteur (52), ledit élément d'étanchéité déliminant vers l'extérieur, au moins partiellement au niveau du bord, l'élément filtrant pour thé (3),
**caractérisé**
- **en ce que** l'élément d'étanchéité (58) présente plusieurs segments d'étanchéité (62), ces segments d'étanchéité (62) étant orientés vers l'extérieur au niveau du bord et étant espacés les uns des autres dans la direction circonférentielle de l'élément d'étanchéité (58), et
- **en ce que** l'élément porteur (52) présente une rainure périphérique (57) dans laquelle l'élément d'étanchéité (58) peut être introduit, et en ce que l'élément d'étanchéité (58) et l'élément porteur (52) présentent des moyens de fixation complémentaires (64a-b, 65a-b) afin de fixer l'élément d'étanchéité (58) dans la rainure (57) de l'élément porteur (52), où l'élément porteur (58) présente un crochet et la rainure (57) de l'élément porteur (52) présente un contour correspondant au crochet en tant que moyens de fixation complémentaires (64a-b, 65a-b).

2. Élément filtrant pour thé selon la revendication 1,
**caractérisé en ce que** l'élément d'étanchéité (58) présente un corps intérieur (60) continu en direction circonférentielle à partir duquel les segments d'étanchéité (62) s'étendent radialement vers l'extérieur.

3. Élément filtrant pour thé selon la revendication 1 ou 2,
**caractérisé en ce que** les segments d'étanchéité (62) orientés vers l'extérieur au niveau du bord sont orientés, inclinés vers le haut, vers la partie supérieure d l'élément filtrant pour thé (3).

4. Élément filtrant pour thé selon la revendication 2 ou 3,
**caractérisé en ce que** le corps intérieur (60) et les segments d'étanchéité (62) sont formés en une seule pièce, en particulier d'une pièce en caoutchouc ou d'une pièce en matière plastique élastomère.

5. Élément filtrant pour thé selon l'une des revendications 1 à 4,
**caractérisé en ce que** l'élément d'étanchéité (58) puisse être déplacé dans la rainure (57) de l'élément porteur (52) entre une première et une deuxième position et **en ce que** l'élément d'étanchéité (58) et l'élément porteur (52) présentent une paire de moyens de fixation complémentaires (64a, 65a ; 64b, 65b) qui sont en prise lorsque l'élément d'étanchéité (58) se trouve dans la première position et qui sont désengagés lorsque l'élément d'étanchéité (58) se trouve dans la deuxième position.

6. Élément filtrant pour thé selon la revendication 5,
**caractérisé en ce que** l'élément d'étanchéité (58) et l'élément porteur (52) présentent plusieurs paires de moyens de fixation complémentaires (64a, 65a ; 64b, 65b) et **en ce que**, indépendamment de la position de l'élément d'étanchéité (58) dans la rainure (57), respectivement au moins une paire parmi les plusieurs paires de moyens de fixation complémentaires (64a, 65a; 64b, 65b) est en prise.

7. Système (1), comportant
- une chambre d'infusion (4) ouverte vers le haut et
- un élément filtrant pour thé (3) pouvant être introduit dans la chambre d'infusion (4) de l'automate à thé (2) selon l'une des revendications 1 à 6,
- où l'élément d'étanchéité (58) de l'élément filtrant pour thé (3) est adapté aux parois de la chambre d'infusion.

8. Système selon la revendication 7, comportant en outre
- un automate à thé (2) conçu pour la préparation d'une boisson à base de thé, l'automate comportant la chambre d'infusion (4) ouverte vers le haut.

9. Système selon la revendication 8,
**caractérisé en ce que** l'automate à thé (2) présente un dispositif de déplacement (28) qui est conçu pour déplacer l'élément filtrant pour thé (3) dans la chambre d'infusion (4).

10. Système selon l'une des revendications 7 à 9,
**caractérisé en ce que** les segments d'étanchéité (62) s'appuient contre les parois de la chambre d'infusion (4) lorsque l'élément filtrant pour thé (3) est agencé dans la chambre d'infusion (4).

11. Système selon l'une des revendications 7 à 10,
**caractérisé en ce que** les segments d'étanchéité sont dimensionnés de sorte qu'ils dépassent du côté de la partie supérieure de la chambre d'infusion lorsque l'élément filtrant pour thé est introduit dans la chambre d'infusion.

12. Système selon l'une des revendications 7 à 11,
**caractérisé en ce que** les segments d'étanchéité sont dimensionnés de sorte qu'ils reposent les uns contre les autres dans la direction circonférentielle lorsque l'élément filtrant pour thé est introduit dans la chambre d'infusion.

13. Utilisation d'un élément d'étanchéité (58) pour un élément filtrant pour thé (3) selon l'une des revendications 1 à 6, où l'élément d'étanchéité (58) comporte plusieurs segments d'étanchéité (62) orientés vers l'extérieur au niveau du bord et espacés les uns des autres dans la direction circonférentielle de l'élément d'étanchéité (58).
